# EUROPÄISCHE PATENTSCHRIFT

(11) **EP 1 789 160 B1**
(45) Veröffentlichungstag und Bekanntmachung des Hinweises auf die Patenterteilung: **18.11.2009**
(21) Anmeldenummer: 05779042.0
(22) Anmeldetag: 10.09.2005
(51) Int. Cl.: B01D 53/14, C01B 7/07, C01B 31/28

(54) **VERFAHREN ZUR TRENNUNG VON CHLORWASSERSTOFF UND PHOSGEN**
METHOD FOR SEPARATING HYDROGEN CHLORIDE AND PHOSGENE
PROCÉDÉ POUR SÉPARER DU CHLORURE D'HYDROGÈNE ET DU PHOSGÈNE

(30) Priorität: 13.09.2004 DE 102004044592
(43) Veröffentlichungstag der Anmeldung: 30.05.2007
(73) Patentinhaber: BASF SE, 67056 Ludwigshafen (DE)
(72) Erfinder: WÖLFERT, Andreas, 74906 Bad Rappenau (DE); KNÖSCHE, Carsten, 67150 Niederkirchen (DE); PALLASCH, Hans-Jürgen, 67063 Ludwigshafen (DE); SESING, Martin, 67165 Waldsee (DE); STROEFER, Eckhard, 68163 Mannheim (DE); POLKA, Hans-Martin, 68259 Mannheim (DE); HEILIG, Manfred, 67346 Speyer (DE)
(86) Internationale Anmeldenummer: PCT/EP2005/009762
(87) Internationale Veröffentlichungsnummer: WO 2006/029788

(56) Entgegenhaltungen:
- EP-A- 0 684 067
- WO-A-02/44117
- DE-A1- 3 139 705
- DE-C- 886 893
- US-A- 4 251 457
- US-A- 4 254 092

## Beschreibung

Bei vielen großtechnisch ausgeübten Verfahren, beispielsweise bei der Herstellung von Isocyanaten, Säurechloriden und Polycarbonaten fallen Gemische aus Chlorwasserstoff und Phosgen an, die in ihre Bestandzeile zerlegt werden müssen. Dazu sind eine Reihe von Verfahren bekannt.

DE 2143994 beschreibt die Entfernung von Phosgen aus gasförmigem Chlorwasserstoff durch Kompression und partielle Kondensation von Chlorwasserstoff. Nachteilig ist der Einsatz eines Gaskompressors mit hohem Kosten- und Wartungsaufwand.

GB 737442 beschreibt die Gewinnung von Phosgen aus einem ChlorwasserstoffPhosgen-Strom durch Kondensation in einem Rohrbündelkondensator. Nachteilig ist die tiefe Kondensationstemperatur von -40 bis -60°C. Dies setzt den Einsatz einer teuren Kälteanlage voraus.

DE1107218 beschreibt die Entfernung von Phosgen aus einem ChlorwasserstoffPhosgen-Gemisch durch Wäsche mit Ethylendichlorid. Nachteilig an dem Verfahren der Wäsche ist, dass das organische Waschmittel Ethylendichlorid nach der Wäsche im Chlorwasserstoff-Strom enthalten ist.

In SU 1811161 wird die Trennung von Chlorwasserstoff und Phosgen durch Absorbtion im Lösungsmittel Chlorbenzol beschrieben. Nachteilig an dem Verfahren der Wäsche ist auch in diesem Fall, dass das Chlorbenzoyl nach der Wäsche im Chlorwasserstoff-Strom enthalten ist.

RO 63844 beschreibt die Entfernung von Phosgen aus einem ChlorwasserstoffPhosgen-Gemisch durch Wäsche. Unter anderem wird das Waschmittel ortho-Dichlorbenzol verwendet. Nachteilig ist auch an diesem Verfahren der Wäsche, dass das organische Waschmittel nach der Wäsche im Chlorwasserstoff-Strom enthalten ist.

DE 1593412 beschreibt die destillative Trennung von Chlorwasserstoff und Phosgen. Der dabei anfallende Chlorwasserstoff ist sehr sauber, so dass er z.B. auch für Lebensmittelanwendungen geeignet ist. Nachteilig an der destillativen Trennung ist, dass diese bei einem höheren Druck durchgeführt werden muss, da der am Kopf der Destillation anfallende Chlorwasserstoff mit einem Kältemedium über Wärmetauscher kondensiert werden muss. Damit für die Erzeugung des Kältemediums keine extrem teure Tieffemperaturkälteanlage eingesetzt werden muss, wird die Destillation unter Druck durchgeführt. Nachteilig ist dabei der erhöhte Sicherheitsaufwand zur sicheren Handhabung des Phosgens unter Druck.

In WO 99/11597 wird die Trennung von Chlorwasserstoff und Phosgen unter Druck in einer Kolonne, die einem Reaktor zur Chlorformiatherstellung nachgeschaltet ist, beschrieben. Der Reaktor wird bei Drücken von 2 bis 60 bar, bevorzugt von 6 bis 40 bar, betrieben. Hohe Drücke werden vorteilhaft zur Trennung von Phosgen und Chlorwasserstoff erkannt, da die Kondenstoren dann nicht bei tiefen Temperaturen betrieben werden müssen. Nachteilig ist dabei der erhöhte Sicherheitsaufwand zur sicheren Handhabung des Phosgens unter Druck.

WO 04/056758 beschreibt ein Verfahren zur Auftrennung eines Stoffgemisches, bestehend aus Chlorwasserstoff und Phosgen, **dadurch gekennzeichnet, dass** zunächst eine partielle oder vollständig Kondensation von Phosgen, dann eine Destillation oder Strippung in einer Kolonne zur Entfernung des Chlorwasserstoffes aus dem Sumpfprodukt Phosgen und anschließend eine Wäsche des Kopfproduktes Chlorwasserstoff mit dem Prozesslösungsmittel zur Absorption des Phosgens im Prozesslösungsmittel durchgeführt wird. Nachteilig an dem Verfahren ist, dass der anfallende Chlorwasserstoff noch Spuren des Prozesslösungsmittels enthält, die z.B. durch Adsorption an einem Aktivkohlebett entfernt werden müssen.

Darüber hinaus wird auch die reaktive Reinigung von Chlorwasserstoff beschrieben, beispielsweise in US 3142535, EP 531836 oder DE 1203741. Nachteilig ist der stöchiometrische Verbrauch der Reaktionslösung und die Zerstörung der entfernten Komponente, so dass diese nicht wiederverwendet werden kann

In JP 09208589 wird zum Entfernen des in der Reaktion gebildeten Chlorwasserstoffs eine Alkalimetall- oder Erdalkalimetallverbindung verwendet, bevorzugt ein schwach saures Salz oder Oxid wie Kalziumoxid. Nachteilig ist, dass der Chlorwasserstoff verbraucht wird und nicht weiterverwendet werden kann.

Aufgabe der Erfindung war es daher, ein Verfahren zur Trennung von Chlorwasserstoff und Phosgen aus einem Phosgen-Chlorwasserstoff-Gemisch bereitzustellen, das bei moderaten Drücken arbeitet, die eine einfache und sichere Handhabung des Phosgens erlauben, und das bei Temperaturen arbeitet, bei denen man ohne teure Tieftemperaturkälteanlage auskommt. Dabei sollen die erhaltenen Chlorwasserstoff- und Phosgenströme eine hohe Reinheit haben.

Überraschend wurde gefunden, dass diese Aufgabe mit einer Wäsche unter der Verwendung einer ionischen Flüssigkeit erfüllt werden kann.

Gegenstand der Erfindung ist demzufolge ein Verfahren zur Trennung von Chlorwasserstoff und Phosgen, **dadurch gekennzeichnet, dass** in einem Schritt a) eine Mischung von Chlorwasserstoff und Phosgen mit einer ionischen Flüssigkeit in Kontakt gebracht wird, in der zumindest ein Teil des Chlorwasserstoffs gelöst wird, und danach in einem Schritt b) der in der ionischen Flüssigkeit gelöste Chlorwasserstoff abgetrennt wird.

Das Chlorwasserstoff/Phosgen-Gemisch wird, wie ausgeführt, in einem ersten Waschschritt a) mit der ionischen Flüssigkeit in Kontakt gebracht.

Dabei bildet sich eine an Chlorwasserstoff freie oder eine an Chlorwasserstoff verarmte Gasphase, das heißt, dass sie weniger Chlorwasserstoff als das Ausgangsgemisch enthält. Die entstehende Waschmittelphase enthält anteilig mehr Chlorwasserstoff als das Ausgangsgemisch. In einem zweiten Verfahrenschritt wird der gereinigte Chlorwasserstoff aus der ionischen Flüssigkeit ausgetrieben.

Das Waschmittel kann nach dem Austreiben des Chlorwasserstoffs wieder zur Trennung des Chtorwasserstoff/Phosgen-Gemisches verwendet werden.

Um die geforderten Reinheiten des Chlorwasserstoffs und des Phosgens zu erreichen, kann es vorteilhaft sein, die Wäsche in einem mehrstufigen Apparat in Kombination mit einem Verdampfer auszuführen. Zur Reduzierung des notwendigen Waschmittelstroms ist es möglich, eine Zwischenkühlung der ionischen Flüssigkeit zur Erhöhung von deren Aufnahmekapazität vorzunehmen.

Zusätzlich kann es vorteilhaft sein, den genannten Waschschritt mit unterschiedlichen ionischen Flüssigkeiten mehrmals zu wiederholen. Dabei kann sowohl der Phosgenals auch der Chlorwasserstoffstrom einer weiteren Wäsche unterzogen werden. Das Verfahren kann kontinuierlich oder diskontinuierlich durchgeführt werden. Bevorzugt wird das Verfahren kontinuierlich durchgeführt.

Der Kontakt zwischen dem Chlorwasserstoff/Phosgen-Gemisch und der ionischen Flüssigkeit zur Lösung des Chlorwasserstoffs im ersten Schritt des erfindungsgemäßen Verfahrens kann in allen üblichen Gas-Flüssig-Kontakt-Apparaten hergestellt werden. Dazu zählen Behälter, Umpumpkreisläufe, mindestens bestehend aus Pumpe und Gaseinleitdüse, Oberflächenabsorber, Fallfilmabsorber, Kolonnen, Blasensäulen, Rührkessel mit Gaseinleitungen, Sprühkolonnen, Strahldüsenwäschern.

Bevorzugt werden Kolonnen mit Einbauten verwendet. Als Einbauten können Packungen, Böden und/oder Füllkörper eingesetzt werden. Das Chlorwasserstoff/Phosgen-Gemisch kann zwischen Kopf und Sumpf der Kolonne oder im Sumpf der Kolonne aufgegeben werden. Bevorzugt wird das Chlorwasserstoff/Phosgen-Gemisch zwischen Kopf und Sumpf der Kolonne aufgegeben.

In einer bevorzugten Ausführungsform wird der Kolonne ein flüssiger Strom im Seitenabzug entnommen, über einen Wärmetauscher abgekühlt und wieder der Kolonne auf einer Stufe zugeführt, die höher oder gleich der Entnahmestufe liegt.

In einer weiteren bevorzugten Ausführungsform ist der Sumpf der Kolonne mit einer Verdampferstufe ausgeführt. Als Verdampfer kommen alle üblichen Verdampfertypen, wie Fallfilmverdampfer, Wendelrohr, Dünnschichtverdampfer, Naturumlaufverdampfer mit externen oder internen Umlauf, beispielsweise ein Robertverdampfer, oder Zwangsumlaufverdampfer in Frage. Der Fallfilmverdampfer kann im geraden Durchgang oder im Umlauf mit einer Pumpe betrieben werden.

Der Kontakt zwischen der Gasphase und der Flüssigphase kann in einer oder mehreren thermodynamischen Stufen durchgeführt werden, vorzugsweise in 1 bis 100 Stufen. Bevorzugt wird der Kontakt in mehreren thermodynamischen Stufen durchgeführt, insbesondere in 2 bis 60 Stufen.

Das Austreiben des im Lösungsmittel gelösten Chlorwasserstoffs erfolgt in mindestens einer theoretischen thermodynamischen Stufe bei mindestens einem Arbeitsdruck. Bevorzugt wird das Austreiben in Apparaten mit einer thermodynamischen Trennstufe durchgeführt.

Als Apparate zum Austreiben des Chlorwasserstoffs kommen Fallfilmverdampfer, Wendelrohre, Dünnschichtverdampfer, Naturumlaufverdampfer mit externen oder internen Umlauf, beispielsweise Robertverdampfer, Kolonnen mit Einbauten, die beheizt sein können, Zwangsumlaufverdampfer oder Fallfilmverdampfer in Frage. Bevorzugt wird ein Robertverdampfer oder ein Fallfilmverdampfer verwendet. Der Fallfilmverdampfer kann im geraden Durchgang oder im Umlauf mit einer Pumpe betrieben werden.

Die im Verfahren verwendeten Apparate können aus allen in der Verfahrenstechnik üblichen Materialen gefertigt werden. Bevorzugt werden Apparate aus Stahl, Emaille, Glas oder faserverstärkten Kunststoffen oder Kombinationen davon.

Die für das erfindungsgemäße Verfahren eingesetzten ionischen Flüssigkeiten werden so ausgewählt, dass die Löslichkeit des zu absorbierenden Stoffes sehr viel größer ist als die der nicht zu absorbierenden Stoffe, dass durch Druck- und/oder Temperaturwechsel der absorbierte Stoff reversibel von der ionischen Flüssigkeit abgetrennt werden'kann, dass bei der Absorption von Säuren in der ionischen Flüssigkeit möglichst das Anion der Säure zur Bildung der ionischen Flüssigkeit verwendet wird, und dass bei der Absorption von Säuren die Flüchtigkeit der korrespondierenden Säure des Anions der ionischen Flüssigkeit geringer ist als die der zu absorbierenden Säure.

Unter ionischen Flüssigkeiten im Sinne der vorliegenden Erfindung werden Verbindungen verstanden, die ein Kation und ein Anion aufweisen, wobei mindestens eines der Ionen, insbesondere mindestens das Kation, organisch ist.

Vorzugsweise sind die Kationen ausgewählt aus der Gruppe, enthaltend
1,2,3-Trimethylimidazolium, 1,3,4,5-Tetramethylimidazolium,
1,3,4-Dimethylimidazolium, 1,3,4-Trimethylimidazolium,
1,3-Dibutyl-2-methylimidazolium, 1,3-Dibutylimidazolium, 1,2-Dimethylimidazolium,
1 ,3-Dimethylimidazolium, 1-Benzyl-3-methylimidäzolium,
1-Butyl-2,3-dimethylimidazolium, 1-Butyl-2-ethyl-5-methylimidazolium,
1-Butyl-2-ethylimidazolium, 1-Butyl-2-methylimidazolium,
1-Butyl-3,4 ,5-trimethylimidazolium, 1-Butyl-3,4-dimethylimidazolium,
1-Butyl-3-ethylimidazolium, 1-Butyl-3-methylimidazolium, 1-Butyl-4-methylimidazolium,
1-Butylimidazolium, 1-Decyl-3-methylimidazolium, 1-Dodecyl-3-methylimidazolium,
1-Ethyl-2,3-dimethylimidazolium, 1-Ethyl-3-methylimidazolium,
1-Hexadecyl-2,3-dimethylimidazolium, 1-Hexadecyl-3-methylimidazolium,
1-Hexyl-2,3-dimethylimidazolium, 1-Hexyl-3-methylimidazolium,
1-Methyl-2-ethylimidazolium, 1-Methyl-3-octylimidazolium, 1-Methylimidazolium,
1-Pentyl-3-methylimidazolium, 1-Phenylpropyl-3-methylimidazolium;
1-Propyl-2,3-dimethylimidazolium, 1-Tetradecyl-3-methylimidazolium,
2,3-Dimethylimidazolium, 2-Ethyl-3,4-dimethylimidazolium, 3,4-Dimethylimidazolium,
1,2-Dimethylpyridinium, 1-Butyl-2-ethyl-6-methylpyridinium, 1-Butyl-2-ethylpyridinium,
1-Butyl-2-methylpyridinium, 1-Butyl-3,4-dimethylpyridinium,
1-Butyl-3,5-dimethylpyridinium, 1-Butyl-3-ethylpyridinium, 1-Butyl-3-methylpyridinium,
1-Butyl-4-methylpyridinium, 1-Butylpyridinium, 1-Ethylpyridinium,
1-Hexyl-3-methylpyridinium, 1-Hexyl-4-methylpyridinium, 1-Hexylpyridinium,
1-Methylpyridinium, 1-Octylpyridinium, 2-Ethyl-1,6-dimethylpyridinium,
2-Ethyl-1-methylpyridinium, 4-Methyl-1-octylpyridinium, 1,1-Dimethylpyrrolidinium,
1-Butyl-1-ethylpyrrolidinium, 1-Butyl-1-methylpyn-olidinium,
1-Ethyl-1-methylpyrrolidinium, 1-Ethyl-3-methylpyrrolidinium,
1-Hexyl-1-methylpyrrolidinium, 1-Octyl-l-methylpyrrolidinium, Guanidinium, Hexamethylguanidinium, N,N,N',N'-Tetramethyl-N"-ethylguanidinium,
N-Pentamethyl-N-isopropylguanidinium, N-Pentamethyl-N-propylguanidinium, Benzyltriphenylphosphonium, Tetrabutylphosphonium, Trihexyl(tetradecyl)phosphonium, Tri-iso-butyl(methyl)phosphonium, Butyltrimethylammonium, Methyltrioctylammonium, Octyltrimethylammonium, Tetrabutylammonium, Tetraethylammonium, Tetramethylammonium, Tributylmethylammonium und Guanidiniumionen der allgemeinen Formel (I) 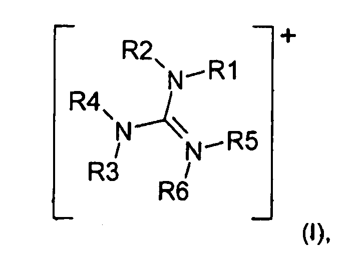 wobei die Reste R1 bis R6 unabhängig voneinander jeweils Wasserstoff, C1-C18-Alkyl, gegebenenfalls durch ein oder mehrere Sauerstoff- und/oder Schwefelatome und/oder ein oder mehrere substituierte oder unsubstituierte Iminogruppen unterbrochenes C2-C18-Alkyl, C6-C12-Aryl, C5-C12-Cycloalkyl oder einen fünf- bis sechsgliedrigen, Sauerstoff-, Stickstoff- und/oder Schwefelatome aufweisenden Heterocyclus bedeuten oder zwei von ihnen gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.
   Besonders bevorzugt sind die Kationen ausgewählt aus der Gruppe, enthaltend 1,2,3-Trimethylimidazolium, 1,2-Dimethylimidazolium, 1,3,4-Trimethylimidazolium, 1,3-Dibutylimidazolium, 1,3-Diethylimidazolium, 1,3-Dimethylimidazolium, 1-Butyl-2,3-dimethylimidazolium, 1-Butyl-2-methylimidazolium, 1-Butyl-3-ethylimidazolium, 1-Butyl-3-methylimidazolium, 1-Butylimidazolium, 1-Ethyl-2,3-dimethylimidazolium, 1-Ethyl-3-methylimidazolium, 1-Hexyl-3-methylimidazolium, 1-Methyl-2-ethylimidazolium, 1-Methyl-3-octylimidazolium, 1-Methylimidazolium, 1,2-Dimethylpyridinium, 1-Butyl-2-methylpyridinium, 1-Butyl-3-ethylpyridinium, 1-Butyl-3-methylpyridinium, 1-Butyl-4-methylpyridinium, 1-Butylpyridinium, 1-Ethylpyridinium, 1-Hexylpyridinium, 1-Methylpyridinium, 2-Ethyl-1-methylpyridinium, 1,1-Dimethylpyrrolidinium, 1-Butyl-l-ethylpyrrolidinium, 1-Butyl-1-methylpyrrolidinium, 1-Ethyl-l-methylpyrrolidinium, Guanidinium, Hexamethylguanidinium, Benzyltriphenylphosphonium, Tetrabutylphosphonium, Butyltrimethylammonium, Methyltrioctylammonium, Tetrabutylammonium, Tributylmethylammonium.
   Insbesondere sind die Kationen ausgewählt aus der Gruppe, enthaltend 1,2,3-Trimethylimidazolium, 1,2-Dimethylimidazolium, 1,3-Dimethylimidazolium, 1-Bütyl-2-methylimidazolium, 1-Butyl-3-ethylimidazolium, 1-Butyl-3-methylimidazolium, 1-Butylimidazolium, 1-Ethyl-3-methylimidazolium, 1-Methylimidazolium, 1-Buty4-4-methylpyridinium, ¹-Butylpyridinium, 1-Ethylpyridinium, 1-Methylpyridinium, Guanidinium, Hexametiylguanidinium, Methyltrioctylammonium und Tributylmethylammonium.

Vorzugsweise sind die Anionen ausgewählt aus der Gruppe, enthaltend Acetat, Bis(2,4,4-trimethylpentyl)phosphinat, Bis(malonato)borat, Bis(oxalato)borat, Bis(pentafluoroethyl)phosphinat, Bis(phtalato)borat, Bis(salicylato)borat, Bis(trifluoromethansulfonyl)imidat, Bis(trifluoromethansulfonyl)methan, Bis(trifluoromethyl)imidat, Bromid, Bromoaluminate, Carbonat, Chlorid, Chloroaluminate, Dichlorocuprat, Dicyanamid, Diethylphosphat, Dihydrogenphosphat, Ethylsulfat, Ethylsulfonat, Fluorid, Hexafluorophosphat, Hydrogencarbonat, Hydrogenphosphat, Hydrogensulfat, Hydrogensulfit, lodid, Methylsulfat, Methylsulfonat, Nitrat, Nitrit, Phosphat, Sulfat, Sulfit, Tetracyanoborat, Tetrafluoroborat, Tetrakis(hsulfato)borat, Tetrakis(methylsulfonato)borat Thiocyanat, Tosylat, Trichlorozinkat, Trifluoroacetat, Trifluoromethylsulfonat, Tris(heptafluoropropyl)trifluorophosphat, Tris(nonafluorobutyl)trifluorophosphat, Tris(pentafluoroethyl)trifluorophosphat und Tris(pentafluoroethylsulfonyl)trifluorophosphat.

Besonders bevorzugt sind die Anionen ausgewählt aus der Gruppe, enthaltend Acetat, Bis(trifluoromethansulfonyl)imidat, Bis(trifluoromethansulfonyl)methan, Bis(trifluoromethyl)imidat, Bromid, Chlorid, Ethylsulfonat, Hexafluorophosphat, Hydrogenphosphat, Hydrogensulfat, Methylsulfonat, Sulfat, Tetrafluoroborat, Tetrakis(hydrogensulfato)borat, Thiocyanat, Tosylat, Trifluoroacetat und Trifluoromethylsulfonat.

Insbesondere sind die Anionen ausgewählt aus der Gruppe, enthaltend Bis(trifluoromethansulfonyl)imidat, Chlorid, Hydrogensulfat, Methylsulfonat, Tosylat und Trifluoromethylsulfonat.

In einer besonders bevorzugten Ausführungsform der Erfindung wird eine ionische Flüssigkeit mit Chlorid, Hydrogensulfat und Methylsulfonat als Anionen eingesetzt. Ganz besonders bevorzugt wird eine ionische Flüssigkeit mit dem Chlorid-lon als Anion eingesetzt.

Vorzugsweise sind ionischen Flüssigkeiten ausgewählt aus der Gruppe, enthaltend
1,2,3-Trimethylimidazoliumbis(trifluoromethansulfonyl)imidat,
1,2-Dimethylimidazoliumbis(trifluoromethansulfonyl)imidat,
1,3-Dimethylimidazoliumbis(trifluoromethansulfonyl)imidat,
1-Butyl-2-methylimidazoliumbis(trifluoromethansulfonyl)imidat,
1-Butyl-3-ethylimidazoliumbis(trifluoromethansulfonyl)imidat,
1-Butyl-3-methylimidazoliumbis(trifluoromethansulfonyl)imidat,
1-Butylimidazoliumbis(trifluoromethansulfonyl)imidat,
1-Ethyl-3-methylimidazoliumbis(trifluoromethansulfonyl)imidat,
1-Methylimidazoliumbis(trifluoromethansulfonyl)imidat,
1-Butyl-4-methylpyridiniumbis(trifluoromethansulfonyl)imidat,
1-Butylpyridiniumbis(trifluoromethansulfonyl)imidat,
1-Ethylpyridiniumbis(trifluoromethansulfonyl)imidat,
1-Methylpyridiniumbis(trifluoromethansulfonyl)imidat, Guanidinium-bis(trifluoromethansulfonyl)imidat, Hexamethylguanidinium-bis(trifluoromethansulfonyl)imidat, Methyltrioctylammonium-bis(trifluoromethansulfonyl)imidat, Tributylmethylammonium-bis(trifluoromethansulfonyl)imidat, 1,2,3-Trimethylimidazoliumchlorid,
1,2-Dimethylimidazoliumchlorid, 1,3-Dimethylimidazoliumchlorid,
1-Butyl-2-methylimidazoliumchlorid, 1-Butyl-3-ethylimidazoliumchlorid,
1-Butyl-3-methylimidazoliumchlorid, 1-Butylimidazoliumchlorid,
1-Ethyl-3-methylimidazoliumchlorid, 1-Methylimidazoliumchlorid,
1-Butyl-4-methylpyridiniumchlorid, 1-Butylpyridiniumchlorid, 1-Ethylpyridiniumchlorid,
1-Methylpyridiniumchlorid, Guanidiniumchlorid, Hexamethylguanidiniumchlorid,
Methyltrioctylammoniumchlorid, Tributylmethylammoniumchlorid,
1,2,3-Trimethylimidazoliumhydrogensulfat, 1,2-Dimethylimidazoliumhydrogensulfat,
1,3-Dimethylimidazoliumhydrogensulfat, 1-Butyl-2-methylimidazoliumhydrogensulfat,
1-Butyl-3-ethylimidazoliumhydrogensulfat, 1-Butyl-3-methylimidazoliumhydrogensulfat,
1-Butylimidazoliumhydrogensulfat, 1-Ethyl-3-methylimidazoliumhydrogensulfat,
1-Methylimidazoliumhydrogensulfat, 1-Butyl-4-methylpyridiniumhydrogensulfat,
1-Butylpyridiniumhydrogensulfat, 1-Ethylpyridiniumhydrogensulfat,
1-Methylpyridiniumhydrogensulfat, Guanidiniumhydrogensulfat, Hexamethylguanidiniumhydrogensulfat, Methyltrioctylammoniumhydrogensulfat, Tributylmethylammoniumhydrogensulfat, 1,2,3-Trimethylimidazoliummethylsulfonat,
1,2-Dimethylimidazoliummethylsulfonat, 1,3-Dimethylimidazoliummethylsulfonat,
1-Butyl-2-methylimidazoliummethylsulfonat, 1-Butyl-3-ethylimidazoliummethylsulfonat,
1-Butyl-3-methylimidazoliummethylsulfonat, 1-Butylimidazoliummethylsulfonat,
1-Ethyl-3-methylimidazoliummethylsulfonat, 1-Methylimidazoliummethylsulfonat,
1-Butyl-4-methylpyridiniummethylsulfonat, 1-Butylpyridiniummethylsulfonat,
1-Ethylpyridiniummethylsulfonat, 1-Methylpyridiniummethylsulfonat, Guanidiniummethylsulfonat, Hexamethylguanidiniummethylsulfonat, Methyltrioctylammoniummethylsulfonat, Tributylmethylammoniummethylsulfonat,
1,2,3-Trimethylimidazoliumtosylat, 1,2-Dimethylimidazoliumtosylat,
1,3-Dimethylimidazoliumtosylat, 1-Butyl-2-methylimidazoliumtosylat,
1-Butyl-3-ethylimidazoliumtosylat, 1-Butyl-3-methylimidazoliumtosylat,
1-Butylimidazoliumtosylat, 1-Ethyl-3-methylimidazoliumtosylat,
1-Methylimidazoliumtosylat, 1-Butyl-4-methylpyridiniumtosylat,
1-Butylpyridiniumtosylat, 1-Ethylpyridiniumtosylat, 1-Methylpyridiniumtosylat, Guanidiniumtosylat, Hexamethylguanidiniumtosylat, Methyltrioctylammoniumtosylat, Tributylmethylammoniumtosylat, 1,2,3-Trimethylimidazoliumtrifluoromethylsulfonat, 1,2-Dimethylimidazoliumtrifluoromethylsulfonat,
1,3-Dimethylimidazoliumtrifluoromethylsulfonat,
1-Butyl-2-methylimidazoliumtrifluoromethylsulfonat,
1-Butyl-3-ethylimidazoliumtrifluoromethylsulfonat,
1-Butyl-3-methylimidazoliumtrifluoromethylsulfonat,
1-Butylimidazoliumtrifluoromethylsulfonat,
1-Ethyl-3-methylimidazoliumtrifluoromethylsulfonat,
1-Methylimidazoliumtrifluoromethylsulfonat,
1-Butyl-4-methylpyridiniumtrifluoromethylsulfonat,
1-Butylpyridiniumtrifluoromethylsulfonat, 1-Ethylpyridiniumtrifluoromethylsulfonat,
1-Methylpyridiniumtrifluoromethylsulfonat, Guanidiniumtrifluoromethylsulfonat, Hexamethylguanidiniumtrifluoromethylsulfonat, Methyltrioctylammoniumtrifluoromethylsulfonat und Tributylmethylammoniumtrifluoromethylsulfonat.

Besonders bevorzugt sind die ionischen Flüssigkeiten ausgewählt aus der Gruppe, enthaltend 1,3-Dimethylimidazoliumchlorid, 1-Butyl-3-methylimidazoliumchlorid, 1-Butyl-4-methylpyridiniumchlorid, 1-Butylpyridiniumchlorid, 1-Ethyl-3-methylimidazoliumchlorid, 1-Methylimidazoliumchlorid, 1-Methylpyridiniumchlorid, 1,3-Dimethylimidazoliumhydrogensulfat, 1-Butyl-3-methylimidazoliumhydrogensulfat, 1-Butyl-4-methylpyridiniumhydrogensulfat, 1-Butylpyridiniumhydrogensulfat, 1-Ethyl-3-methylimidazoliumhydrogensulfat, 1-Methylimidazoliumhydrogensulfat, 1-Methylpyridiniumhydrogensulfat, 1,3-Dimethylimidazoliummethylsulfonat, 1-Butyl-3-methylimidazoliummethylsulfonat, 1-Butyl-4-methylpyridiniummethylsulfonat, 1-Butylpyridiniummethylsulfonat, 1-Ethyl-3-methylimidazoliummethylsulfonat, 1-Methylimidazoliummethylsulfonat, 1-Methylpyridiniummethylsulfonat, 1,3-Dimethylimidazoliumtosylat, 1-Butyl-3-methylimidazoliumtosylat, 1-Butyl-4-methylpyridiniumtosylat, 1-Butylpyridiniumtosylat, 1-Ethyl-3-methylimidazoliumtosylat, 1-Methylimidazoliumtosylat und 1-Methylpyridiniumtosylat.

Insbesondere sind die ionischen Flüssigkeiten ausgewählt aus der Gruppe, enthaltend 1-Butyl-3-methylimidazoliumchlorid, 1-Butyl-4-methylpyridiniumchlorid, 1-Butylpyridiniumchlorid, 1-Ethyl-3-methylimidazoliumchlorid, 1-Methylimidazoliumchlorid, 1-Butyl-3-methylimidazoliumhydrogensulfat, 1-Butyl-4-methylpyridiniumhydrogensulfat, 1-Butylpyridiniumhydrogensulfat, 1-Ethyl-3-methylimidazoliumhydrogensulfat, 1-Methylimidazoliumhydrogensulfat, 1-Butyl-3-methylimidazoliummethylsulfonat, 1-Butyl-4-methylpyridiniummethylsulfonat, 1-Butylpyridiniummethylsulfonat, 1-Ethyl-3-methylimidazoliummethylsulfonat und 1-Methylimidazoliummethylsulfonat.

Bevorzugte ionische Flüssigkeit ist EMIM (1-Ethyl-3-methylimidazoliumchlorid).

Der Temperaturbereich des Verfahrens in der Waschstufe beträgt vorzugsweise -35°C bis 300°C, besonders bevorzugt -20 bis 150°C, insbesondere 60 bis 100°C. Auf jeden Fall wird das Verfahren in der Waschstufe oberhalb des Erstarrungspunkts des polaren Waschmittels durchgeführt.

Der Druck im Verfahren beträgt zumeist 0,2 bis 20 bar, bevorzugt 0,5 bis 16 bar, besonders bevorzugt 1 bis 14 bar. Dabei liegt in einer bevorzugten Ausführung der Druck in der Waschstufe bei einem Druck, der gleich oder kleiner ist als der Druck des zu verarbeitenden Chlorwasserstoff/Phosgen-Gemischs. In einer weiteren bevorzugten Ausführungsform liegt der Druck der Austreibstufe auf einem Druckniveau, das gleich oder höher ist als der Druck der Folgestufe, die das ausgetriebene Gas verarbeitet.

In einer bevorzugten Ausführungsform wird der der Waschstufe entnommene Lösungsmittelstrom durch eine Pumpe und einen Wärmetauscher geleitet und aufgeheizt. In einer weiteren bevorzugten Ausführungsform wird der die Austreibstufe verlassende Lösungsmittelstrom durch eine Pumpe und durch einen Wärmetauscher geleitet und abgekühlt. In einer besonders bevorzugten Ausführungsform können diese beiden Wärmetauscher über einen thermischen Kreis gekoppelt oder auch identisch sein.

Die üblicherweise mit dem Verfahren aufzutrennenden Einsatzgemische weisen ein Molverhältnis von Chlorwasserstoff zu Phosgen von 1 zu 1000 bis 1 zu 0,001, bevorzugt von 1 zu 100 bis 1 zu 0,01, besonders bevorzugt von 1 zu 20 bis 1 zu 0,05 auf. Die Einsatzgemische können gasförmig, flüssig oder als Gas-Flüssig-Gemisch vorliegen. Bevorzugt werden gasförmige Gemische im Verfahren eingesetzt.

Das dem Verfahren zugeführten Chlorwasserstoff/Phosgen-Gemisch kann auch noch größere Mengen eines oder mehrerer zusätzlicher Gase oder/und eines oder mehrerer weiterer Lösungsmittel, wie Monochlorbenzol, Dichlorbenzol, enthalten, die sich mit der ionischen Flüssigkeit nicht oder nur teilweise molekular mischen. Wenn dies der Fall ist, können die zusätzlichen Lösungsmittel in einer bevorzugten Ausführung als zweite Flüssigphase auf der Waschstufe oder auf der Abtrennstufe abgetrennt werden.

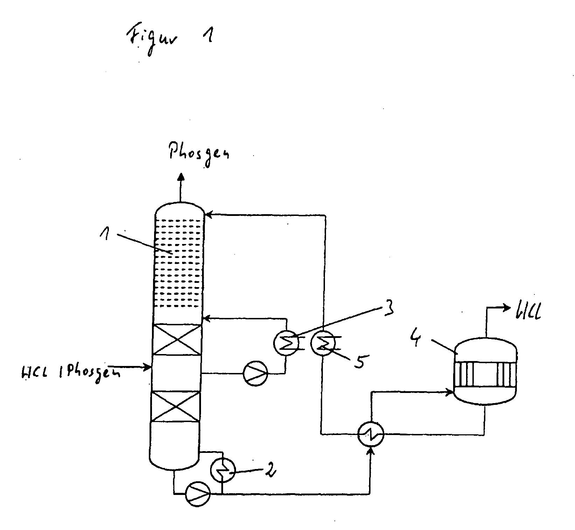

In Figur 1 wird eine Ausführungsform des erfindungsgemäßen Verfahrens dargestellt. Das Chlorwasserstoff/Phosgen-Gemisch wird in eine Kolonne (1) zwischen Sumpf und Kopf oder direkt in den Sumpf, bevorzugt zwischen Sumpf und Kopf eingeleitet. Am Kopf der Kolonne erfolgt die Einleitung der ionischen Flüssigkeit. Im Verdampfer (2) werden die in der ionischen Flüssigkeit gelösten Gase partiell wieder ausgetrieben.

Ein Teil der Flüssigphase wird vom Einleitboden entnommen, über einen Wärmetauscher (3) gekühlt und oberhalb des Einleitbodens oder auf dem Einleitboden selbst, bevorzugt oberhalb des Einleitbodens, in die Kolonne zurückgeführt. Ein Strom, der das Waschmittel enthält, wird am Sumpf der Kolonne abgezogen.

Der am Sumpf der Kolonne (1) entnommene Strom wird einem Verdampfer (4) zugeführt. Dieser kann eine oder mehrere Verdampferstufen aufweisen, in denen unterschiedliche Druckniveaus herrschen können. In dieser Verdampferstufe wird der Chlorwasserstoff aus dem Lösungsmittel ausgetrieben.

Der Waschmittelstrom wird vor Aufgabe auf die Kolonne zur Durchführung des Waschschritts in einem Wärmetauscher (5) abgekühlt.

Der anfallende Chlorwasserstoff kann bei entsprechender Sauberkeit beispielsweise in der Lebensmittelindustrie oder in der Elektronikindustrie eingesetzt werden. Eine weitere Verwertung des Chlorwasserstoffs findet in der Oxichlorierung, beispielsweise im EDC-Verfahren zur Herstellung von 1,2-Dichlorethan statt. Chlorwasserstoff wird auch oft zur Herstellung von Chlor in einem Elektrolyse-Prozess oder in einem Deacon-Prozess verwendet. Insbesondere beim EDC-Verfahren und beim Elektrolyse-Prozess ist es wichtig, dass der Chlorwasserstoff nur einen ganz bestimmten Anteil an organischen Verunreinigungen enthält.

Der anfallende Chlorwasserstoff und das anfallende Phosgen werden jeweils mit einer Reinheit von mindestens 80 %, bevorzugt von mindestens 95 %, besonders bevorzugt von mindestens 99,9 % und ganz besonders bevorzugt von mindestens 99,99 % gewonnen. Alle Angaben sind Masse-%.

Der anfallende Chlorwasserstoff und das anfallende Phosgen werden gasförmig gewonnen. Das Phosgen kann in einer nachfolgenden Stufe in einem Wärmetauscher für die Weiterverarbeitung kondensiert werden.

Das anfallende Phosgen kann wieder im vorgeschalteten Verfahren, wie der Isocya nat-, Säurechlorid und Polycarbonatherstellung, verwendet werden.

### Beispiel

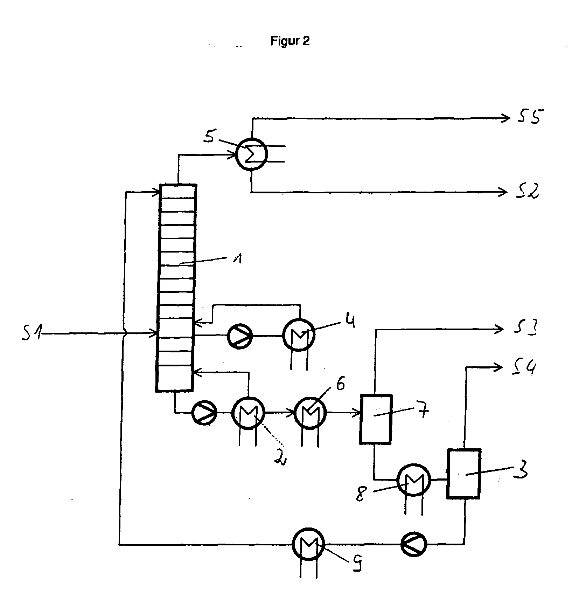

Es wurde die in Figur 2 beschriebene Vorrichtung verwendet.

100 kg/h eines Gasgemischs (S1) der Zusammensetzung 85 Masse-% Phosgen und 15 Masse-% Chlorwasserstoff wurden bei 37°C der Bodenkolonne (1) mit 13 Böden mit einem Sumpfzwangsumlaufverdampfer (2) zugeführt. Am Kopf der Kolonne wurden 51,6 kg/h Ethyl-Methyl-Imidazoliumchlorid (EMIM-Chlorid), das aus der zweiten Austreibstufe des Chlorwasserstoffs (3) rückgeführt wurde, mit einer Temperatur von 40°C als Waschflüssigkeit aufgegeben. Ein Teil der die Kolonne durchlaufenden ionischen Flüssigkeit wurde auf der Höhe des Gaseinleitboden entnommen, im Wärmetauscher (4) auf 40°C zwischengekühlt und in die Kolonne zurückgeführt. Das von Chlorwasserstoff weitgehend befreite Gas verließ die Kolonne über Kopf und wurde im Wärmetauscher (5) bei 40°C und etwa 3,9 bar kondensiert. Es wurden 85,4 kg/h flüssiges Phosgen (S2) mit einer Reinheit von 99,5 Masse-% gewonnen. Das bei der Kondensation des Phosgens verbleibende Gas (S5) wurde ausgeschleust. Der mit Chlorwasserstoff angereicherte Waschmittelstrom verließ den Sumpf der Kolonne und wurde über den Wärmetauscher (6) auf 250°C erhitzt. Die entstehende Gasphase von 12,1 kg/h Chlorwasserstoff mit einer Reinheit von 99,99 Masse-% (S3) wurde in einem Gas-Flüssig-Phasenscheider (7) von der ionischen Flüssigkeit bei 4,2 bar getrennt. In einem zweiten Schritt wurde im Behälter (3) bei 1,3 bar nach Zufuhr von Verdampfungswärme über den Wärmetauscher (8) weiteres 2,4 kg/h Chlorwasserstoffgas (S4) ausgetrieben. Die Waschflüssigkeit wurde im Wärmetauscher (9) auf 40°C abgekühlt und in die Kolonne zurückgeführt.

## Patentansprüche

1. Verfahren zur Trennung von Chlorwasserstoff und Phosgen, **dadurch gekennzeichnet, dass** in einem Schritt a) eine Mischung von Chlorwasserstoff und Phosgen mit einer ionischen Flüssigkeit in Kontakt gebracht wird, in der zumindest ein Teil des Chlorwasserstoffs gelöst wird, und danach in einem Schritt b) der in der ionischen Flüssigkeit gelöste Chlorwasserstoff abgetrennt wird.

2. Verfahren nach Anspruch 1, **dadurch gekennzeichnet, dass** die ionischen Flüssigkeiten Verbindungen sind, die ein Kation und ein Anion aufweisen, wobei mindestens eines der Ionen, insbesondere mindestens das Kation, organisch ist.

3. Verfahren nach Anspruch 1, **dadurch gekennzeichnet, dass** das Kation ausgewählt ist aus der Gruppe, enthaltend 1,2,3-Trimethylimidazolium, 1,3,4,5-Tetramethylimidazolium, 1,3,4-Dimethylimidazolium, 1,3,4-Trimethylimidazolium, 1,3-Dibutyl-2-methylimidazolium, 1,3-Dibutylimidazolium, 1,2-Dimethylimidazolium, 1,3-Dimethylimidazolium, 1-Benzyl-3-methylimidazolium, 1-Butyl-2,3-dimethylimidazolium, 1-Butyl-2-ethyl-5-methylimidazolium, 1-Butyl-2-ethylimidazolium, 1-Butyl-2-methylimidazolium, 1-Butyl-3,4,5-trimethylimidazolium, 1-Butyl-3,4-dimethylimidazolium, 1-Butyl-3-ethylimidazolium, 1-Butyl-3-methylimidazolium, 1-Butyl-4-methylimidazolium, 1-Butylimidazolium, 1-Decyl-3-methylimidazolium, 1-Dodecyl-3-methylimidazolium, 1-Ethyl-2,3-dimethylimidazolium, 1-Ethyl-3-methylimidazolium, 1-Hexadecyl-2,3-dimethylimidazolium, 1-Hexadecyl-3-methylimidazolium, 1-Hexyl-2,3-dimethylimidazolium, 1-Hexyl-3-methylimidazolium, 1-Methyl-2-ethylimidazolium, 1-Methyl-3-octylimidazolium, 1-Methylimidazolium, 1-Pentyl-3-methylimidazolium, 1-Phenylpropyl-3-methylimidazolium, 1-Propyl-2,3-dimethylimidazolium, 1-Tetradecyl-3-methylimidazolium, 2,3-Dimethylimidazolium, 2-Ethyl-3,4-dimethyümidazolium, 3,4-Dimethylimidazolium, 1,2-Dimethylpyridinium, 1-Butyl-2-ethyl-6-methylpyridinium, 1-Butyl-2-ethylpyridinium, 1-Butyl-2-methylpyridinium, 1-Butyl-3,4-dimethylpyridinium, 1-Butyl-3,5-dimethylpyridinium, 1-Butyl-3-ethylpyridinium, 1-Butyl-3-methylpyridinium, 1-Butyl-4-methylpyridinium, 1-Butylpyridinium, 1-Ethylpyridinium, 1-Hexyl-3-methylpyridinium, 1-Hexyl-4-methylpyridinium, 1-Hexylpyridinium, 1-Methylpyridinium, 1-Octylpyridinium, 2-Ethyl-1,6-dimethylpyridinium, 2-Ethyl-1-methylpyridinium, 4-Methyl-1-octylpyridinium, 1,1-Dimethylpyrrolidinium, 1-Buty-1-ethylpyrrolidinium, 1-Butyl-1-methylpyrrolidinium, 1-Ethyl-1-methylpyrrolidinium, 1-Ethyl-3-methylpyrrolidinium, 1-Hexyl-1-methylpyrrolidinium, 1-Octyl-1-methylpyrrolidinium, Guanidinium, Hexamethylguanidinium, N,N,N',N'-Tetramethyl-N"-ethylguanidinium, N-Pentamethyl-N-isopropylguanidinium, N-Pentamethyl-N-propylguanidinium, Benzyltriphenylphosphonium, Tetrabutylphosphonium, Trihexyl(tetradecyl)phosphonium, Tri-iso-butyl(methyl)phosphonium, Butyltrimethylammonium, Methyltrioctylammonium, Octyltrimethylammonium, Tetrabutylammonium, Tetraethylammonium, Tetramethylammonium, Tributylmethylammonium und Guanidiniumionen der allgemeinen Formel (I) 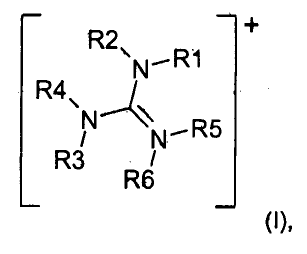 wobei die Reste R1 bis R6 unabhängig voneinander jeweils Wasserstoff, C1-C18-Alkyl, gegebenenfalls durch ein oder mehrere Sauerstoff- und/oder Schwefelatome und/oder ein oder mehrere substituierte oder unsubstituierte Iminogruppen unterbrochenes C2-C18-Alkyl, C6-C12-Aryl, C5-C12-Cycloalkyl oder einen fünf- bis sechsgliedrigen, Sauerstoff-, Stickstoff- und/oder Schwefelatome aufweisenden Heterocyclus bedeuten oder zwei von ihnen gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

4. Verfahren nach Anspruch 1, **dadurch gekennzeichnet, dass** das Kation ausgewählt ist aus der Gruppe, enthaltend 1,2,3-Trimethylimidazolium, 1,2-Dimethylimidazolium, 1,3,4-Trimethylimidazolium, 1,3-Dibutylimidazolium, 1,3-Diethylimidazolium, 1,3-Dimethylimidazolium, 1-Butyl-2,3-dimethylimidazolium, 1-Butyl-2-methylimidazolium, 1-Butyl-3-ethylimidazolium, 1-Butyl-3-methylimidazolium, 1-Butylimidazolium, 1-Ethyl-2,3-dimethylimidazolium, 1-Ethyl-3-methylimidazolium, 1-Hexyl-3-methylimidazolium, 1-Methyl-2-ethylimidazolium, 1-Methyl-3-octylimidazolium, 1-Methylimidazolium, 1,2-Dimethylpyridinium, 1-Butyl-2-methylpyridinium, 1-Butyl-3-ethylpyridinium, 1-Butyl-3-methylpyridinium, 1-Butyl-4-methylpyridinium, 1-Butylpyridinium, 1-Ethylpyridinium, 1-Hexylpyridinium, 1-Methylpyridinium, 2-Ethyl-1-methylpyridinium, 1,1-Dimethylpyrrolidinium, 1-Butyl-1-ethylpyrrolidinium, 1-Butyl-1-methylpyrrolidinium, 1-Ethyl-1-methylpyrrolidinium, Guanidinium, Hexamethylguanidinium, Benzyltriphenylphosphonium, Tetrabutylphosphonium, Butyltrimethylammonium, Methyltrioctylammonium, Tetrabutylammonium, Tributylmethylammonium.

5. Verfahren nach Anspruch 1, **dadurch gekennzeichnet, dass** das Kation ausgewählt ist aus der Gruppe, enthaltend 1,2,3-Trimethylimidazolium, 1,2-Dimethylimidazolium, 1,3-Dimethylimidazolium, 1-Butyl-2-methylimidazolium, 1-Butyl-3-ethylimidazolium, 1-Butyl-3-methylimidazolium, 1-Butylimidazolium, 1-Ethyl-3-methylimidazolium, 1-Methylimidazolium, 1-Butyl-4-methylpyridinium, 1-Butylpyridinium, 1-Ethylpyridinium, 1-Methylpyridinium, Guanidinium, Hexamethylguanidinium, Methyltrioctylammonium und Tributylmethylammonium.

6. Verfahren nach Anspruch 1, **dadurch gekennzeichnet, dass** das Anion ausgewählt ist aus der Gruppe, enthaltend Acetat, Bis(2,4,4-trimethylpentyl)phosphinat, Bis(malonato)borat, Bis(oxalato)borat, Bis(pentafluoroethyl)phosphinat, Bis(phtalato)borat, Bis(salicylato)borat, Bis(trifluoromethansulfonyl)imidat, Bis(trifluoromethansulfonyl)methan, Bis(trifluoromethyl)imidat, Bromid, Bromoaluminate, Carbonat, Chlorid, Chloroaluminate, Dichlorocuprat, Dicyanamid, Diethylphosphat, Dihydrogenphosphat, Ethylsulfat, Ethylsulfonat, Fluorid, Hexafluorophosphat, Hydrogencarbonat, Hydrogenphosphat, Hydrogensulfat, Hydrogensulfit, lodid, Methylsulfat, Methylsulfonat, Nitrat, Nitrit, Phosphat, Sulfat, Sulfit, Tetracyanoborat, Tetrafluoroborat, Tetrakis(hsulfato)borat, Tetrakis(methylsulfonato)borat, Thiocyanat, Tosylat, Trichlorozinkat, Trifluoroacetat, Trifluoromethylsulfonat, Tris(heptafluoropropyl)trifluorophosphat, Tris(nonafluorobutyl)trifluorophosphat, Tris(pentafluoroethyl)trifluorophosphat und Tris(pentafluoroethylsulfonyl)trifluorophosphat.

7. Verfahren nach Anspruch 1, **dadurch gekennzeichnet, dass** das Anion ausgewählt ist aus der Gruppe, enthaltend Acetat, Bis(trifluoromethansulfonyl)imidat, Bis(trifluoromethansulfonyl)methan, Bis(trifluoromethyl)imidat, Bromid, Chlorid, Ethylsulfonat, Hexafluorophosphat, Hydrogenphosphat, Hydrogensulfat, Methylsulfonat, Sulfat, Tetrafluoroborat, Tetrakis(hydrogensulfato)borat, Thiocyanat, Tosylat, Trifluoroacetat und Trifluoromethylsulfonat.

8. Verfahren nach Anspruch 1, **dadurch gekennzeichnet, dass** das Anion ausgewählt ist aus der Gruppe, enthaltend Bis(trifluoromethansulfonyl)imidat, Chlorid, Hydrogensulfat, Methylsulfonat, Tosylat und Trifluoromethylsulfonat.

9. Verfahren nach Anspruch 1, **dadurch gekennzeichnet, dass** das Anion Chlorid ist.

10. Verfahren nach Anspruch 1, **dadurch gekennzeichnet, dass** die ionische Flüssigkeit ausgewählt ist aus der Gruppe, enthaltend 1,3-Dimethylimidazoliumchlorid, 1-Butyl-3-methylimidazoliumchlorid, 1-Butyl-4-methylpyridiniumchlorid, 1-Butylpyridiniumchlorid, 1-Ethyl-3-methylimidazoliumchlorid, 1-Methylimidazoliumchlorid, 1-Methylpyridiniumchlorid, 1,3-Dimethylimidazoliumhydrogensulfat, 1-Butyl-3-methylimidazoliumhydrogensulfat, 1-Butyl-4-methylpyridiniumhydrogensulfat, 1-Butylpyridiniumhydrogensulfat, 1-Ethyl-3-methylimidazoliumhydrogensulfat, 1-Methylimidazoliumhydrogensulfat, 1-Methylpyridiniumhydrogensulfat, 1,3-Dimethylimidazoliummethylsulfonat, 1-Butyl-3-methylimidazoliummethylsulfonat, 1-Butyl-4-methylpyridiniummethylsulfonat, 1-Butylpyridiniummethylsulfonat, 1-Ethyl-3-methylimidazoliummethylsulfonat, 1-Methylimidazoliummethylsulfonat, 1-Methylpyridiniummethylsulfonat, 1,3-Dimethylimidazoliumtosylat, 1-Butyl-3-methylimidazoliumtosylat, 1-Butyl-4-methylpyridiniumtosylat, 1-Butylpyridiniumtosylat, 1-Ethyl-3-methylimidazoliumtosylat, 1-Methylimidazoliumtosylat und 1-Methylpyridiniumtosylat.

11. Verfahren nach Anspruch 1, **dadurch gekennzeichnet, dass** die ionische Flüssigkeit ausgewählt ist aus der Gruppe, enthaltend 1-Butyl-3-methylimidazoliumchlorid, 1-Butyl-4-methylpyridiniumchlorid, 1-Butylpyridiniumchlorid, 1-Ethyl-3-methylimidazoliumchlorid, 1-Methylimidazoliumchlorid, 1-Butyl-3-methylimidazoliumhydrogensulfat, 1-Butyl-4-methylpyridiniumhydrogensulfat, 1-Butylpyridiniumhydrogensulfat, 1-Ethyl-3-methylimidazoliumhydrogensulfat, 1-Methylimidazoliumhydrogensulfat, 1-Butyl-3-methylimidazoliummethylsulfonat, 1-Butyl-4-methylpyridiniummethylsulfonat, 1-Butylpyridiniummethylsulfonat, 1-Ethyl-3-methylimidazoliummethylsulfonat und 1-Methylimidazoliummethylsulfonat.

12. Verfahren nach Anspruch 1, **dadurch gekennzeichnet, dass** die ionische Flüssigkeit Ethyl-3-methylimidazoliumchlorid ist.

13. Verfahren nach Anspruch 1, **dadurch gekennzeichnet, dass** Schritt a) in einem Behälter, einem Umpumpkreislauf mindestens bestehend aus Pumpe und Gaseinleitdüse, einem Oberflächenabsorber, einem Fallfilmabsorber, einer Kolonne, einer Blasensäule, einem Rührkessel mit Gaseinleitungen, einer Sprühkolonne oder einem Strahldüsenwäscher durchgeführt wird.

14. Verfahren nach Anspruch 1, **dadurch gekennzeichnet, dass** Schritt a) in einer Kolonne durchgeführt wird.

15. Verfahren nach Anspruch 1, **dadurch gekennzeichnet, dass** Schritt b) in einem Fallfilmverdampfer, einem Wendelrohr, einem Dünnschichtverdampfer, einem Naturumlaufverdampfer mit externen oder internen Umlauf, einer Kolonne mit Einbauten, die beheizt sein können, einem Zwangsumlauf-Entspannungsverdampfer oder einem Fallfilmverdampfer durchgeführt wird.

## Claims

1. A process for separating hydrogen chloride and phosgene, which comprises bringing a mixture of hydrogen chloride and phosgene into contact with an ionic liquid in which at least part of the hydrogen chloride is dissolved in a step a) and then separating off the hydrogen chloride dissolved in the ionic liquid in a step b).

2. The process according to claim 1, wherein the ionic liquids are compounds comprising a cation and an anion, with at least one of the ions, in particular at least the cation, being organic.

3. The process according to claim 1, wherein the cation is selected from the group consisting of 1,2,3-trimethylimidazolium, 1,3,4,5-tetramethylimidazolium, 1,3,4-dimethylimidazolium, 1,3,4-trimethylimidazolium, 1,3-dibutyl-2-methylimidazolium, 1,3-dibutylimidazolium, 1,2-dimethylimidazolium, 1,3-dimethylimidazolium, 1-benzyl-3-methylimidazolium, 1-butyl-2,3-dimethylimidazolium, 1-butyl-2-ethyl-5-methylimidazolium, 1-butyl-2-ethylimidazolium, 1-butyl-2-methylimidazolium, 1-butyl-3,4,5-trimethylimidazolium, 1-butyl-3,4-dimethylimidazolium, 1-butyl-3-ethylimidazolium, 1-butyl-3-methylimidazolium, 1-butyl-4-methylimidazolium, 1-butylimidazolium, 1-decyl-3-methylimidazolium, 1-dodecyl-3-methylimidazolium, 1-ethyl-2,3-dimethylimidazolium, 1-ethyl-3-methylimidazolium, 1-hexadecyl-2,3-dimethylimidazolium, 1-hexadecyl-3-methylimidazolium, 1-hexyl-2,3-dimethylimidazolium, 1-hexyl-3-methylimidazolium, 1-methyl-2-ethylimidazolium, 1-methyl-3-octylimidazolium, 1-methylimidazolium, 1-pentyl-3-methylimidazolium, 1-phenylpropyl-3-methylimidazolium, 1-propyl-2,3-dimethylimidazolium, 1-tetradecyl-3-methylimidazolium, 2,3-dimethylimidazolium, 2-ethyl-3,4-dimethylimidazolium, 3,4-dimethylimidazolium, 1,2-dimethylpyridinium, 1-butyl-2-ethyl-6-methylpyridinium, 1-butyl-2-ethylpyridinium, 1-butyl-2-methylpyridinium, 1-butyl-3,4-dimethylpyridinium, 1-butyl-3,5-dimethylpyridinium, 1-butyl-3-ethylpyridinium, 1-butyl-3-methylpyridinium, 1-butyl-4-methylpyridinium, 1-butylpyridinium, 1-ethylpyridinium, 1-hexyl-3-methylpyridinium, 1-hexyl-4-methylpyridinium, 1-hexylpyridinium, 1-methylpyridinium, 1-octylpyridinium, 2-ethyl-1,6-dimethylpyridinium, 2-ethyl-1-methylpyridinium, 4-methyl-1-octylpyridinium, 1,1-dimethylpyrrolidinium, 1-butyl-1-ethylpyrrolidinium, 1-butyl-1-methylpyrrolidinium, 1-ethyl-1-methylpyrrolidinium, 1-ethyl-3-methylpyrrolidinium, 1-hexyl-1-methylpyrrolidinium, 1-octyl-1-methylpyrrolidinium, guanidinium, hexamethylguanidinium, N,N,N',N'-tetramethyl-N"-ethylguanidinium, N-pentamethyl-N-isopropylguanidinium, N-pentamethyl-N-propylguanidinium, benzyltriphenylphosphonium, tetrabutylphosphonium, trihexyl(tetradecyl)phosphonium, triisobutyl(methyl)phosphonium, butyltrimethylammonium, methyltrioctylammonium, octyltrimethylammonium, tetrabutylammonium, tetraethylammonium, tetramethylammonium, tributylmethylammonium and guanidinium ions of the general formula (I) 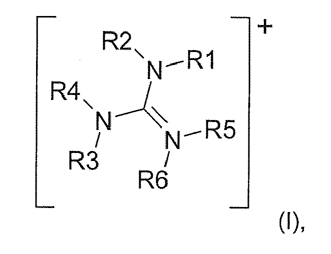 where the radicals R1 to R6 are each, independently of one another, hydrogen, C1-C18-alkyl, C2-C18-alkyl which may be interrupted by one or more oxygen and/or sulfur atoms and/or one or more substituted or unsubstituted imino groups, C6-C12-aryl, C5-C12-cycloalkyl or a five- or six-membered, oxygen-, nitrogen- and/or sulfur-containing heterocycle or two of them can together form an unsaturated, saturated or aromatic ring which may be interrupted by one or more oxygen and/or sulfur atoms and/or one or more substituted or unsubstituted imino groups, where the radicals mentioned may each be substituted by functional groups, aryl, alkyl, aryloxy, alkyloxy, halogen, heteroatoms and/or heterocycles.

4. The process according to claim 1, wherein the cation is selected from the group consisting of 1,2,3-trimethylimidazolium, 1,2-dimethylimidazolium, 1,3,4-trimethylimidazolium, 1,3-dibutylimidazolium, 1,3-diethylimidazolium, 1,3-dimethylimidazolium, 1-butyl-2,3-dimethylimidazolium, 1-butyl-2-methylimidazolium, 1-butyl-3-ethylimidazolium, 1-butyl-3-methylimidazolium, 1-butylimidazolium, 1-ethyl-2,3-dimethylimidazolium, 1-ethyl-3-methylimidazolium, 1-hexyl-3-methylimidazolium, 1-methyl-2-ethylimidazolium, 1-methyl-3-octylimidazolium, 1-methylimidazolium, 1,2-dimethylpyridinium, 1-butyl-2-methylpyridinium, 1-butyl-3-ethylpyridinium, 1-butyl-3-methylpyridinium, 1-butyl-4-methylpyridinium, 1-butylpyridinium, 1-ethylpyridinium, 1-hexylpyridinium, 1-methylpyridinium, 2-ethyl-1-methylpyridinium, 1,1-dimethylpyrrolidinium, 1-butyl-1-ethylpyrrolidinium, 1-butyl-1-methylpyrrolidinium, 1-ethyl-1-methylpyrrolidinium, guanidinium, hexamethylguanidinium, benzyltriphenylphosphonium, tetrabutylphosphonium, butyltrimethylammonium, methyltrioctylammonium, tetrabutylammonium, tributylmethylammonium.

5. The process according to claim 1, wherein the cation is selected from the group consisting of 1,2,3-trimethylimidazolium, 1,2-dimethylimidazolium, 1,3-dimethylimidazolium, 1-butyl-2-methylimidazolium, 1-butyl-3-ethylimidazolium, 1-butyl-3-methylimidazolium, 1-butylimidazolium, 1-ethyl-3-methylimidazolium, 1-methylimidazolium, 1-butyl-4-methylpyridinium, 1-butylpyridinium, 1-ethylpyridinium, 1-methylpyridinium, guanidinium, hexamethylguanidinium, methyltrioctylammonium and tributylmethylammonium.

6. The process according to claim 1, wherein the anion is selected from the group consisting of acetate, bis(2,4,4-trimethylpentyl)phosphinate, bis(malonato)borate, bis(oxalato)borate, bis(pentafluoroethyl)phosphinate, bis(phthalato)borate, bis(salicylato)borate, bis(trifluoromethanesulfonyl)imidate, bis(trifluoromethanesulfonyl)methane, bis(trifluoromethyl)imidate, bromide, bromoaluminates, carbonate, chloride, chloroaluminates, dichlorocuprate, dicyanamide, diethylphosphate, dihydrogenphosphate, ethylsulfate, ethylsulfonate, fluoride, hexafluorophosphate, hydrogencarbonate, hydrogenphosphate, hydrogensulfate, hydrogensulfite, iodide, methylsulfate, methylsulfonate, nitrate, nitrite, phosphate, sulfate, sulfite, tetracyanoborate, tetrafluoroborate, tetrakis(hsulfato)borate, tetrakis(methylsulfonato)borate, thiocyanate, tosylate, trichlorozincate, trifluoroacetate, trifluoromethylsulfonate, tris(heptafluoropropyl)trifluorophosphate, tris(nonafluorobutyl)trifluorophosphate, tris(pentafluoroethyl)trifluorophosphate and tris(pentafluoroethylsulfonyl)trifluorophosphate.

7. The process according to claim 1, wherein the anion is selected from the group consisting of acetate, bis(trifluoromethanesulfonyl)imidate, bis(trifluoromethanesulfonyl)methane, bis(trifluoromethyl)imidate, bromide, chloride, ethylsulfonate, hexafluorophosphate, hydrogenphosphate, hydrogensulfate, methylsulfonate, sulfate, tetrafluoroborate, tetrakis(hydrogensulfato)borate, thiocyanate, tosylate, trifluoroacetate and trifluoromethylsulfonate.

8. The process according to claim 1, wherein the anion is selected from the group consisting of bis(trifluoromethanesulfonyl)imidate, chloride, hydrogensulfate, methylsulfonate, tosylate and trifluoromethylsulfonate.

9. The process according to claim 1, wherein the anion is chloride.

10. The process according to claim 1, wherein the ionic liquid is selected from the group consisting of 1,3-dimethylimidazolium chloride, 1-butyl-3-methylimidazolium chloride, 1-butyl-4-methylpyridinium chloride, 1-butylpyridinium chloride, 1-ethyl-3-methylimidazolium chloride, 1-methylimidazolium chloride, 1-methylpyridinium chloride, 1,3-dimethylimidazolium hydrogensulfate, 1-butyl-3-methylimidazolium hydrogensulfate, 1-butyl-4-methylpyridinium hydrogensulfate, 1-butylpyridinium hydrogensulfate, 1-ethyl-3-methylimidazolium hydrogensulfate, 1-methylimidazolium hydrogensulfate, 1-methylpyridinium hydrogensulfate, 1,3-dimethylimidazolium methylsulfonate, 1-butyl-3-methylimidazolium methylsulfonate, 1-butyl-4-methylpyridinium methylsulfonate, 1-butylpyridinium methylsulfonate, 1-ethyl-3-methylimidazolium methylsulfonate, 1-methylimidazolium methylsulfonate, 1-methylpyridinium methylsulfonate, 1,3-dimethylimidazolium tosylate, 1-butyl-3-methylimidazolium tosylate, 1-butyl-4-methylpyridinium tosylate, 1-butylpyridinium tosylate, 1-ethyl-3-methylimidazolium tosylate, 1-methylimidazolium tosylate and 1-methylpyridinium tosylate.

11. The process according to claim 1, wherein the ionic liquid is selected from the group consisting of 1-butyl-3-methylimidazolium chloride, 1-butyl-4-methylpyridinium chloride, 1-butylpyridinium chloride, 1-ethyl-3-methylimidazolium chloride, 1-methylimidazolium chloride, 1-butyl-3-methylimidazolium hydrogensulfate, 1-butyl-4-methylpyridinium hydrogensulfate, 1-butylpyridinium hydrogensulfate, 1-ethyl-3-methylimidazolium hydrogensulfate, 1-methylimidazolium hydrogensulfate, 1-butyl-3-methylimidazolium methylsulfonate, 1-butyl-4-methylpyridinium methylsulfonate, 1-butylpyridinium methylsulfonate, 1-ethyl-3-methylimidazolium methylsulfonate and 1-methylimidazolium methylsulfonate.

12. The process according to claim 1, wherein the ionic liquid is ethyl-3-methylimidazolium chloride.

13. The process according to claim 1, wherein step a) is carried out in a vessel, a pump circuit comprising at least a pump and a gas inlet nozzle, a surface absorber, a falling film absorber, a column, a bubble column, a stirred vessel with gas inlets, a spray column or a jet nozzle scrubber.

14. The process according to claim 1, wherein step a) is carried out in a column.

15. The process according to claim 1, wherein step b) is carried out in a falling film evaporator, a helical tube, a thin film evaporator, a natural convection evaporator with external or internal circulation, a column with internals which may be heated, a forced circulation depressurization evaporator or a falling film evaporator.

## Revendications

1. Procédé pour la séparation de chlorure d'hydrogène et de phosgène, **caractérisé en ce que** dans une étape a) on met en contact un mélange de chlorure d'hydrogène et de phosgène avec un liquide ionique dans lequel est dissoute au moins une partie du chlorure d'hydrogène, et ensuite dans une étape b) on sépare le chlorure d'hydrogène dissous dans le liquide ionique.

2. Procédé selon la revendication 1, **caractérisé en ce que** les liquides ioniques sont des composés qui comportent un cation et un anion, au moins l'un des ions, en particulier au moins le cation, étant organique.

3. Procédé selon la revendication 1, **caractérisé en ce que** le cation est choisi dans le groupe contenant les ions 1,2,3-triméthylimidazolium, 1,3,4,5-tétraméthylimidazolium, 1,3,4-diméthylimidazolium, 1,3,4-triméthylimidazolium, 1,3-dibutyl-2-méthylimidazolium, 1,3-dibutylimidazolium, 1,2-diméthylimidazolium, 1,3-diméthylimidazolium, 1-benzyl-3-méthylimidazolium, 1-butyl-2,3-diméthylimidazolium, 1-butyl-2-éthyl-5-méthylimidazolium, 1-butyl-2-éthylimidazolium, 1-butyl-2-méthylimidazolium, 1-butyl-3,4,5-triméthylimidazolium, 1-butyl-3,4-diméthylimidazolium, 1-butyl-3-éthylimidazolium, 1-butyl-3-méthylimidazolium, 1-butyl-4-méthylimidazolium, 1-butylimidazolium, 1-décyl-3-méthylimidazolium, 1-dodécyl-3-méthylimidazolium, 1-éthyl-2,3-diméthylimidazolium, 1-éthyl-3-méthylimidazolium, 1-hexadécyl-2,3-diméthylimidazolium, 1-hexadécyl-3-méthylimidazolium, 1-hexyl-2,3-diméthylimidazolium, 1-hexyl-3-méthylimidazolium, 1-méthyl-2-éthylimidazolium, 1-méthyl-3-octylimidazolium, 1-méthylimidazolium, 1-pentyl-3-méthylimidazolium, 1-phénylpropyl-3-méthylimidazolium, 1-propyl-2,3-diméthylimidazolium, 1-têtradécyl-3-méthylimidazolium, 2,3-dimêthylimidazolium, 2-éthyl-3,4-diméthylimidazolium, 3,4-diméthylimidazolium, 1,2-diméthylpyridinium, 1-butyl-2-éthyl-6-méthylpyridinium, 1-butyl-2-éthylpyridinium, 1-butyl-2-méthylpyridinium, 1-butyl-3,4-diméthylpyridinium, 1-butyl-3,5-diméthylpyridinium, 1-butyl-3-éthylpyridinium, 1-butyl-3-méthylpyridinium, 1-butyl-4-méthylpyridinium, 1-butylpyridinium, 1-éthylpyridinium, 1-hexyl-3-méthylpyridinium, 1-hexyl-4-méthylpyridinium, 1-hexylpyridinium, 1-méthylpyridinium, 1-octylpyridinium, 2-éthyl-1,6-diméthylpyridinium, 2-éthyl-1-méthylpyridinium, 4-méthyl-1-octylpyridinium, 1,1-diméthylpyrrolidinium, 1-butyl-1-éthylpyrrolidinium, 1-butyl-1-méthylpyrrolidinium, 1-éthyl-1-méthylpyrrolidinium, l-éthyl-3-méthylpyrrolidinium, 1-hexyl-1-méthylpyrrolidinium, 1-octyl-1-méthylpyrrolidinium, guanidinium, hexaméthylguanidinium, N,N,N',N'-tétraméthyl-N"-éthylguanidinium, N-pentaméthyl-N-isopropylguanidinium, N-pentaméthyl-N-propylguanidinium, benzyltriphenylphosphonium, tétrabutylphosphonium, trihexyl(tétradécyl)phosphonium, tri-iso-butyl(méthyl)phosphonium, butyltriméthylammonium, méthyltrioctylammonium, octyltriméthylammonium, tétrabutylammonium, tétraéthylammonium, tétraméthylammonium, tributylméthylammonium et les ions guanidinium de formule générale (I) 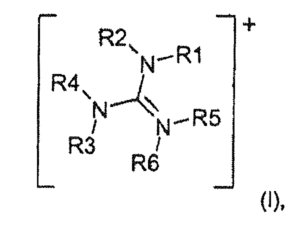 dans laquelle les radicaux R1 à R6 représentent, indépendamment l'un de l'autre, un atome d'hydrogène, un groupe alkyle en C₁-C₁₈, un groupe alkyle en C₂-C₁₈ éventuellement interrompu par un ou plusieurs atomes d'oxygène et/ou de soufre et/ou par un ou plusieurs groupes imino substitués ou non substitués, un groupe aryle en C₆-C₁₂, cycloalkyle en C₅-C₁₂ ou un hétérocycle à cinq ou six chaînons, comportant des atomes d'oxygène, d'azote et/ou de soufre, ou deux de ces radicaux forment ensemble un cycle insaturé, saturé ou aromatique et éventuellement interrompu par un ou plusieurs atomes d'oxygène et/ou de soufre et/ou par un ou plusieurs groupes imino substitués ou non substitués, les radicaux cités pouvant être substitués chacun par des groupes fonctionnels, aryle, alkyle, aryloxy, alcoxy, des atomes d'halogène, des hétéroatomes et/ou des hétérocycles.

4. Procédé selon la revendication 1, **caractérisé en ce que** le cation est choisi dans le groupe contenant les ions 1,2,3-triméthylimidazolium, 1,2-diméthylimidazolium, 1,3,4-triméthylimidazolium, 1,3-dibutylimidazolium, 1,3-diéthylimidazolium, 1,3-diméthylimidazolium, 1-butyl-2,3-diméthylimidazolium, 1-butyl-2-méthylimidazolium, 1-butyl-3-éthylimidazolium, 1-butyl-3-méthylimidazolium, 1-butylimidazolium, 1-éthyl-2,3-diméthylimidazolium, 1-éthyl-3-méthylimidazolium, 1-hexyl-3-méthylimidazolium, 1-méthyl-2-éthylimidazolium, 1-méthyl-3-octylimidazolium, 1-méthylimidazolium, 1,2-diméthylpyridinium, 1-butyl-2-méthylpyridinium, 1-butyl-3-éthylpyridinium, 1-butyl-3-méthylpyridinium, 1-butyl-4-méthylpyridinium, 1-butylpyridinium, 1-éthylpyridinium, 1-hexylpyridinium, 1-méthylpyridinium, 2-éthyl-1-méthylpyridinium, 1,1-diméthylpyrrolidinium, 1-butyl-1-éthylpyrrolidinium, 1-butyl-1-méthylpyrrolidinium, 1-éthyl-1-méthylpyrrolidinium, guanidinium, hexaméthylguanidinium, benzyltriphénylphosphonium, tétrabutylphosphonium, butyltriméthylammonium, méthyltrioctylammonium, tétrabutylammonium, tributylméthylammonium.

5. Procédé selon la revendication 1, **caractérisé en ce que** le cation est choisi dans le groupe contenant les ions 1,2,3-triméthylimidazolium, 1,2-diméthylimidazolium, 1,3-diméthylimidazolium, 1-butyl-2-méthylimidazolium, 1-butyl-3-éthylimidazolium, 1-butyl-3-méthylimidazolium, 1-butylimidazolium, 1-éthyl-3-méthylimidazolium, 1-méthylimidazolium, 1-butyl-4-méthylpyridinium, 1-butylpyridinium, 1-éthylpyridinium, 1-méthylpyridinium, guanidinium, hexaméthylguanidinium, méthyltrioctylammonium et tributylméthylammonium.

6. Procédé selon la revendication 1, **caractérisé en ce que** l'anion est choisi dans le groupe contenant les ions acétate, bis(2,4,4-triméthylpentyl)phosphinate, bis(malonato)borate, bis(oxalato)borate, bis(pentafluoroéthyl)phosphinate, bis(phtalato)borate, bis(salicylato)borate, bis(trifluorométhansulfonyl)imidate, bis(trifluorométhansulfonyl)méthane, bis(trifluorométhyl)imidate, bromure, bromoaluminate, carbonate, chlorure, chloroaluminate, dichlorocuprate, dicyanamide, diéthylphosphate, dihydrogénophosphate, éthyl-sulfate, éthylsulfonate, fluorure, hexafluorophosphate, hydrogénocarbonate, hydrogénophosphate, hydrogénosulfate, hydrogénosulfite, iodure, méthylsulfate, méthylsulfonate, nitrate, nitrite, phosphate, sulfate, sulfite, tétracyanoborate, tétrafluoroborate, tétrakis(hydrogénosulfato)-borate, tétrakis(méthylsulfonato)borate, thiocyanate, tosylate, trichlorozincate, trifluoroacétate, trifluorométhylsulfonate, tris(heptafluoropropyl)trifluorophosphate, tris(nonafluorobutyl)trifluorophosphate, tris(pentafluoroéthyl)trifluorophosphate et tris(pentafluoroéthylsulfonyl)trifluorophosphate.

7. Procédé selon la revendication 1, **caractérisé en ce que** l'anion est choisi dans le groupe contenant les ions acétate, bis(trifluorométhanesulfonyl)imidate, bis(trifluorométhanesulfonyl)méthane, bis(trifluorométhyl)imidate, bromure, chlorure, éthylsulfonate, hexafluorophosphate, hydrogénophosphate, hydrogénosulfate, méthylsulfonate, sulfate, tétrafluoroborate, tétrakis(hydrogéno-sulfato)borate, thiocyanate, tosylate, trifluoroacétate et trifluorométhylsulfonate.

8. Procédé selon la revendication 1, **caractérisé en ce que** l'anion est choisi dans le groupe contenant les ions bis(trifluorométhanesulfonyl)imidate, chlorure, hydrogénosulfate, méthylsulfonate, tosylate et trifluorométhylsulfonate.

9. Procédé selon la revendication 1, **caractérisé en ce que** l'anion est le chlorure.

10. Procédé selon la revendication 1, **caractérisé en ce que** le liquide ionique est choisi dans le groupe contenant le chlorure de 1,3-diméthylimidazolium, le chlorure de 1-butyl-3-méthylimidazolium, le chlorure de 1-butyl-4-méthylpyridinium, le chlorure de 1-butylpyridinium, le chlorure de 1-éthyl-3-méthylimidazolium, le chlorure de 1-méthylimidazolium, le chlorure de 1-méthylpyridinium, l'hydrogénosulfate de 1,3-diméthylimidazolium, l'hydrogénosulfate de 1-butyl-3-méthylimidazolium, l'hydrogénosulfate de 1-butyl-4-méthylpyridinium, l'hydrogénosulfate de 1-butylpyridinium, l'hydrogénosulfate de 1-éthyl-3-méthylimidazolium, l'hydrogénosulfate de 1-méthylimidazolium, l'hydrogénosulfate de 1-méthylpyridinium, le méthylsulfonate de 1,3-diméthylimidazolium, le méthylsulfonate de 1-butyl-3-méthylimidazolium, le méthylsulfonate de 1-butyl-4-méthylpyridinium, le méthylsulfonate de 1-butylpyridinium, le méthylsulfonate de 1-éthyl-3-méthylimidazolium, le méthylsulfonate de 1-méthylimidazolium, le méthylsulfonate de 1-méthylpyridinium, le tosylate de 1,3-diméthylimidazolium, le tosylate de 1-butyl-3-méthylimidazolium, le tosylate de 1-butyl-4-méthylpyridinium, le tosylate de 1-butylpyridinium, le tosylate de 1-éthyl-3-méthylimidazolium, le tosylate de 1-méthylimidazolium et le tosylate de 1-méthylpyridinium.

11. Procédé selon la revendication 1, **caractérisé en ce que** le liquide ionique est choisi dans le groupe contenant le chlorure de 1-butyl-3-méthylimidazolium, le chlorure de 1-butyl-4-méthylpyridinium, le chlorure de 1-butylpyridinium, le chlorure de 1-éthyl-3-méthylimidazolium, le chlorure de 1-méthylimidazolium, l'hydrogénosulfate de 1-butyl-3-méthylimidazolium, l'hydrogénosulfate de 1-butyl-4-méthylpyridinium, l'hydrogénosulfate de 1-butylpyridinium, l'hydrogénosulfate de 1-éthyl-3-méthylimidazolium, l'hydrogénosulfate de 1-méthylimidazolium, le méthylsulfonate de 1-butyl-3-méthylimidazolium, le méthylsulfonate de 1-butyl-4-méthylpyridinium, le méthylsulfonate de 1-butylpyridinium, le méthylsulfonate de 1-éthyl-3-méthylimidazolium et le méthylsulfonate de 1-méthylimidazolium.

12. Procédé selon la revendication 1, **caractérisé en ce que** le liquide ionique est le chlorure d'éthyl-3-méthylimidazolium.

13. Procédé selon la revendication 1, **caractérisé en ce que** l'étape a) est effectuée dans un récipient, un circuit de pompage au moins consistant en pompe et injecteur de gaz, un absorbeur superficiel, un absorbeur à film descendant, une colonne, une colonne à barbotage, un récipient à agitation et conduits d'arrivée de gaz, une colonne à pulvérisation ou un laveur à injecteurs.

14. Procédé selon la revendication 1, **caractérisé en ce que** l'étape a) est effectuée dans une colonne.

15. Procédé selon la revendication 1, **caractérisé en ce que** l'étape b) est effectuée dans un évaporateur à film descendant, un tube hélicoïdal, un évaporateur à couche mince, un évaporateur à circulation naturelle à circuit externe ou interne, une colonne à inserts qui peuvent être chauffés, un évaporateur à détente à circulation forcée ou un évaporateur à film descendant.
